# EUROPEAN PATENT APPLICATION

(11) **EP 3 594 007 A1**
(43) Date of publication of application: **15.01.2020**
(21) Application number: 18798609.6
(22) Date of filing: 28.03.2018
(51) Int. Cl.: B41M 5/00, B41J 2/01, C09D 11/34

(54) **IMAGE FORMING METHOD**

(30) Priority: 12.05.2017 JP 2017095431
(71) Applicant: Konica Minolta, Inc., Tokyo 100-7015 (JP)
(72) Inventor: IKEDA, Masashi, Tokyo 100-7015 (JP); WATANABE, Shogo, Tokyo 100-7015 (JP)
(74) Representative: Gille Hrabal
(86) International application number: PCT/JP2018/012681
(87) International publication number: WO 2018/207487

(57) **Abstract**

An image forming method which enables more homogenous image gloss of an image made of gel ink and formed by lump-sum irradiation of active rays. The present invention is an image forming method using a plurality of types of active ray curable ink jet ink having different compositions. The method comprises: a step of gelatinizing each of liquid droplets of the plurality of types of ink jet ink by ejecting the liquid droplets of each ink from a nozzle of an ejection head and causing the same to land onto a surface of a recording medium; and a step of simultaneously irradiating the radiation rays onto the liquid droplets of the plurality of types of ink jet ink that have landed.

## Description

### Technical Field

The present invention relates to an image forming method.

### Background Art

Inkjet image forming methods, which enable simple and inexpensive image formation, have been used in various printing fields. As one type of inkjet inks, there have been known inks that contain a photocurable compound, which is cured by irradiation with actinic radiation, and a photopolymerization initiator (hereinafter, simply referred to as "actinic radiation curable inks"). Droplets of an actinic radiation curable ink are caused to be landed on a surface of a recording medium, and the droplets landed are irradiated with actinic radiation to thereby form a cured film, which is formed by curing of the droplets of the ink, on the surface of the recording medium. Forming this cured film enables formation of a desired image. Image forming methods by means of actinic radiation curable inks have been attracting attention because of their capability of forming images having high adhesion irrespective of the water absorbing property of recording media. Actinic radiation includes ultraviolet radiation (UV), electron beams, α rays, γ rays, X rays, and the like. From the viewpoint of easy handling and less influence on human body, UV is predominantly used.

As one type of actinic radiation curable inks, there have been developed inks that contain a gelling agent and undergo temperature-induced reversible sol-gel phase transition (hereinafter, simply referred to as "gel inks"). For example, PLT 1 mentions that, after the gel ink is warmed to be a sol and ejected from a nozzle of an inkjet head, the ink undergoes gelation by cooling when landed on the surface of a recording medium, and is temporarily fixed.

Another method for forming an image is known, in which droplets of a gel ink landed on the surface of a recording medium are irradiated with actinic radiation while the amount of oxygen present around the ink is controlled. For example, PTL 2 describes a method for controlling the gloss of an image to be formed by irradiating droplets of a gel ink landed on the surface of a recording medium with actinic radiation in an atmosphere in which the oxygen concentration is adjusted.

Meanwhile, there is contemplated an image forming method in which electron beams or the like are used as actinic radiation with which the droplets landed are irradiated. For example, in PLT 3, an image forming method is described in which landing of an inkjet ink on the surface of a recording medium and semi-curing of the landed inkjet ink by irradiation with UV are repeated for inkjet inks of respective colors, and an entire image is completely cured by irradiation with an electron beam in the end.

Additionally, PLT 4 describes an inkjet ink including a reduced amount of a trifunctional or higher functional photocurable compound in order to prevent lack of flexibility of a cured film due to formation of a rigid crosslinked structure by means of irradiation with an electron beam.

### Citation List

### Patent Literatures

PTL 1 Japanese Patent Application Laid-Open No. 2006-193745
PTL 2 Japanese Patent Application Laid-Open No. 2014-159114
PTL 3 WO2016/158209
PTL 4 Japanese Patent Application Laid-Open No. 2016-180072

### Summary of Invention

### Technical Problem

Gel ink droplets as described in PLT 1 and PLT 2 undergo gelation and have reduced flowability after landing on the surface of a recording medium, and are temporarily fixed (pinned) thereon. For this reason, gel inks are less likely to be subjected to image collapse even when droplets of inks of a plurality of colors are landed on the surface of a recording medium and then irradiated with UV in a batch manner to simultaneously cure the inks of a plurality of colors. Batch irradiation with actinic radiation, which enables image formation with an actinic radiation curable ink by means of fewer irradiation sources, is useful for downsizing of inkjet image forming apparatuses and cost-cutting for image formation.

According to consideration by the present inventors, however, when formation of an image with gel inks was attempted by means of UV batch irradiation, the image had non-uniform gloss and a gloss difference among the regions in the image occurred (hereinafter, also simply referred to as "gloss non-uniformity") in some cases.

The present invention has been made in the view of the above problems, and an object of the present invention is to provide an image forming method capable of providing more uniform gloss of an image even when the image is formed with gel inks by means of batch irradiation with actinic radiation.

### Solution to Problem

The problems mentioned above are solved by the following method.
[1] An image forming method, comprising:
   ejecting droplets of a plurality of actinic radiation curable inkjet inks from a nozzle of an ejection head and landing each droplet on a surface of a recording medium to cause all the droplets of the plurality of inkjet inks to undergo gelation, the plurality of inkjet inks each containing a photocurable compound and a gelling agent to undergo temperature-induced reversible phase transition and each having a different composition; and
   simultaneously irradiating the landed droplets of the plurality of inkjet inks with radiation.
[2] The image forming method according to [1], wherein the plurality of inkjet inks include an inkjet ink having a content of a photopolymerization initiator of less than 0.1mass% based on the total mass of the inkjet ink.
[3] The image forming method according to [1] or [2], wherein the plurality of inkjet inks include an inkjet ink having a content of the gelling agent of 0.5mass% or more and less than 5.0mass% based on the total mass of the inkjet ink.
[4] The image forming method according to any one of [1] to [3], wherein the plurality of inkjet inks include an inkjet ink containing an aliphatic ester or aliphatic ketone as the gelling agent, the aliphatic ester or aliphatic ketone having a linear alkyl group containing 12 or more carbon atoms in the main chain thereof.
[5] The image forming method according to any one of [1] to [4], wherein the radiation is an electron beam having an accelerating voltage of less than 150 kV.

### Advantageous Effects of Invention

According to the present invention, there is provided an image forming method capable of providing more uniform gloss of an image even when the image is formed with gel inks by means of batch irradiation with actinic radiation.

### Brief Description of Drawings

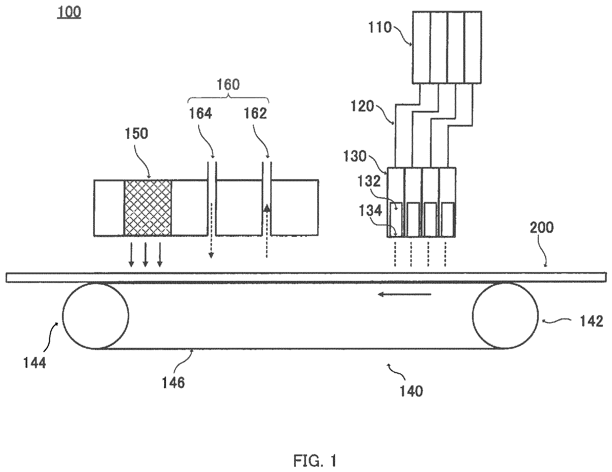

FIG. 1 is a side view of an inkjet image forming apparatus according to one embodiment of the present invention.

### Description of Embodiments

The present inventors, as a result of intensive studies, have developed an image forming method that may provide more uniform gloss of an image and inhibit occurrence of gloss non-uniformity in the image by ejecting droplets of a plurality of gel inks each having a different composition from a nozzle of an ejection head and landing the inks on the surface of a recording medium to cause each ink to undergo gelation, and irradiating simultaneously the droplets of the plurality of gel inks that have undergone gelation on the surface of the recording medium with radiation to thereby cure the droplets of the plurality of gel inks.

According to the findings of the present inventors, in the case of irradiating a droplet of an actinic radiation curable ink that has been landed on the surface of a recording medium with actinic radiation, if the amount of energy of the actinic radiation that has reached the vicinity of the surface of the droplet is different from the amount of energy of the actinic radiation that has reached the inside of the droplet, a difference in the curing rate occurs between the vicinity of the surface and the inside of the droplet. Then, the entire droplet fails to be uniformly cured, and thus, curing wrinkles may occur on the surface of a cured film. The curing wrinkles may scatter light to be applied on an image (visible light or the like) to thereby lower the gloss of the image.

A colorant contained in each color ink herein has a different UV absorption rate depending on the type. When a large amount of the ink adheres to the surface of a recording medium, UV is more likely to be absorbed before reaching the inside of the droplet. For this reason, the UV transmittance to the inside of a droplet is different by each color ink and is also different by the amount of the ink adhering to the surface of the recording medium.

Particularly in the case where a recording medium onto which a plurality of actinic radiation curable inks has landed is subjected to UV batch irradiation, the type of colorants contained in the landed actinic radiation curable inks and the amount of the actinic radiation curable inks landed onto each region may be different by the region in the image. For this reason, it is conceived that generation of regions in which UV reaches sufficiently the inside of a droplet and regions in which UV reaches insufficiently the inside of a droplet in an image leads to generation of regions in which the difference in the curing rate between the surface of the droplet and the inside of the droplet is larger and regions in which the difference in the above curing rate is smaller in the image and thus, a difference in the gloss among the regions in the image is likely to be generated.

In particular, as for a gel ink, transmission of UV is likely to be inhibited also by a gelling agent, and regions in which the amount of UV reaching the inside of a droplet becomes minute are likely to be generated. It is thus conceived that the gloss difference (gloss non-uniformity) among regions caused by the difference in the transmittance to the inside of the droplet becomes more marked.

The above gloss non-uniformity is markedly observed particularly in the case of UV batch irradiation under a low-oxygen atmosphere, as described in PLT 2. Conceivably, this is because a decrease in the curing rate on the surface due to oxygen inhibition is less likely to occur under a low-oxygen atmosphere and the difference in the curing rate between the surface and the inside of the droplet as described above is likely to be more marked.

In contrast, radiation, which has a higher amount of energy than that of UV, is likely to reach further inside the droplet, irrespective of differences in the colorant, the amount adhering, and the like. For this reason, it is conceived that use of radiation can reduce the difference in the curing rate between the surface and the inside of the droplet to make curing wrinkles less likely to occur on the surface of a cured film and can reduce the difference in the transmittance by color or by amount adhering even on batch irradiation to thereby reduce the difference in the gloss among regions in the image.

When droplets of an actinic radiation curable ink containing no gelling agent are cured by radiation, as described in PLT 3, a cured film becomes harder. When an image is bent or curved, the cured film may be broken to crack the image (decrease in bend cracking resistance). Meanwhile, according to the findings of the present inventors, even when the amount of the trifunctional or higher functional photocurable compound is reduced, the bend cracking resistance of the image is not sufficiently enhanced, as described in PLT 4.

In contrast to this, a gel ink containing a gelling agent has moderate flexibility even in a form of a cured film formed by curing by means of radiation. Conceivably, the reason is as follows: the gelling agent forms a three-dimensional structure such as a card house structure, which is dispersed in the cured film, and thus, the crosslinking of the photocurable compound is inhibited by the three-dimensional structure of the gelling agent and the crosslinking density is less likely to increase so high; and the dispersed gelling agent inhibits generation and expansion of cracking.

Meanwhile, the gelling agent reduces the crosslinking density of the cured film as mentioned above, but the crosslinking density in a cured film formed by curing droplets of a gel ink by radiation having a higher amount of energy becomes higher than the crosslinking density in a cured film formed by curing droplets of the gel ink by UV. For this reason, it is conceived that, when droplets of the gel ink are cured by radiation, a dense crosslinking structure makes residues such as an unreacted photocurable compound, an unreacted photopolymerization initiator, or the photopolymerization initiator after the reaction less likely to escape through the crosslinking structure and also can inhibit occurrence of odors or the like caused by precipitation of these residues from the surface of the cured film.

### 1. Inkjet Image Forming Method

One embodiment of the present invention relates to an inkjet image forming method including ejecting droplets of a plurality of gel inks each having a different composition from a nozzle of an ejection head and landing each droplet on the surface of a recording medium to cause all the droplets of a plurality of gel inks to undergo gelation (hereinbelow, also simply referred to as the "gelation step") and irradiating the above gelled droplets of the plurality of gel inks with radiation to cure the droplets of the plurality of gel inks (hereinbelow, also simply referred to as the "curing step").

### 1-1. Gel Ink

The gel ink described above is an actinic radiation-curable inkjet ink containing a photocurable compound and a gelling agent and undergoing temperature-induced reversible sol-gel phase transition.

The properties to be described below are only required to be satisfied by at least one gel ink of the plurality of gel inks described above, but from the viewpoint of making effects to be described more marked, the properties are preferably satisfied by two or more gel inks of the plurality of gel inks, more preferably satisfied by a half or more gel inks of the plurality of gel inks, further preferably satisfied by 70% or more gel inks of the plurality of gel inks, particularly preferably satisfied by all the gel inks of the plurality of gel inks.

### 1-1-1. Photocurable Compound

The photocurable compound is only required to be a compound that has a function of polymerizing or crosslinking by generating a polymerization or crosslinking reaction by means actinic radiation irradiation to cure a gel ink. Examples of the photocurable compound include radical polymerizable compounds and cationic polymerizable compounds. The photocurable compound may be any of a monomer, polymerizable oligomer, prepolymer, and mixture thereof. Only one photocurable compound or two or more photocurable compounds may be contained in the gel ink.

The content of photocurable compound can be, for example, based on the total mass of the gel ink 1mass% or more and 97mass% or less.

The radical polymerizable compound is preferably an unsaturated carboxylate compound, more preferably a (meth)acrylate. Only one radical polymerizable compound or two or more radical polymerizable compounds may be contained in the gel ink. In the present invention, a "(meth)acrylate" means an acrylate or methacrylate, a "(meth)acryloyl group" means an acryloyl group or methacryloyl group, and "(meth)acryl" means acryl or methacryl.

Examples of (meth)acrylates include monofunctional (meth)acrylates including isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxy ethyl hexahydrophthalate, butoxyethyl (meth)acrylate, ethoxy diethylene glycol (meth)acrylate, methoxy diethylene glycol (meth)acrylate, methoxy polyethylene glycol (meth)acrylate, methoxy propylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxy ethyl succinate, 2-(meth)acryloyloxy ethyl phthalate, 2-(meth)acryloyloxyethyl-2-hydroxyethyl-phthalate, and t-butylcyclohexyl(meth)acrylate, bifunctional acrylates including triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A PO adduct (meth)acrylate, hydroxypivalic acid neopentyl glycol di(meth)acrylate, polytetramethylene glycol di(meth)acrylate, polyethylene glycol diacrylate, tripropylene glycol diacrylate, and tricyclodecane dimethanol diacrylate, and trifunctional or higher functional acrylates including trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate.

The (meth)acrylate may be a modified product. Examples of the (meth)acrylate as a modified product include ethylene oxide-modified (meth)acrylates including triethylene ethylene glycol diacrylate, polyethylene glycol diacrylate, ethylene oxide-modified trimethylolpropane tri(meth)acrylate, and ethylene oxide-modified pentaerythritol tetraacrylate, ethylene oxide-modified (meth)acrylates including tripropylene ethylene glycol diacrylate, polypropylene glycol diacrylate, propylene oxide-modified trimethylolpropane tri(meth)acrylate, and propylene oxide-modified pentaerythritol tetraacrylate, caprolactone-modified (meth)acrylates including caprolactone-modified trimethylolpropane tri(meth)acrylate, and caprolactam-modified (meth)acrylates including caprolactam-modified dipentaerythritol hexa(meth)acrylate.

The (meth)acrylate may be a polymerizable oligomer. Examples of the (meth)acrylate as a polymerizable oligomer include epoxy (meth)acrylate oligomers, aliphatic urethane (meth)acrylate oligomers, aromatic urethane (meth)acrylate oligomers, polyester (meth)acrylate oligomers, and linear (meth)acryl oligomers.

The cationic polymerizable compound may be an epoxy compound, a vinyl ether compound, an oxetane compound, or the like. Only one cationic polymerizable compound or two or more cationic polymerizable compounds may be contained in the gel ink.

Examples of the vinyl ether compound include monofunctional vinyl ether compounds including butyl vinyl ether, butyl propenyl ether, butyl butenyl ether, hexyl vinyl ether, ethyl hexyl vinyl ether, phenyl vinyl ether, benzyl vinyl ether, ethyl ethoxy vinyl ether, acetyl ethoxy ethoxy vinyl ether, cyclohexyl vinyl ether, and adamantyl vinyl ether, bifunctional vinyl ether compounds including ethylene glycol divinyl ether, diethylene glycol divinyl ether, triethylene glycol divinyl ether, propylene glycol divinyl ether, dipropylene glycol vinyl ether, butylene divinyl ether, dibutylene glycol divinyl ether, neopentyl glycol divinyl ether, cyclohexane diol divinyl ether, cyclohexane dimethanol divinyl ether, norbornyl dimethanol divinyl ether, isovinyl divinyl ether, divinyl resorcin, and divinyl hydroquinone, and trifunctional or higher functional vinyl ether compounds including glycerin trivinyl ether, glycerin ethylene oxide adduct trivinyl ether (molar number of added ethylene oxide: 6), trimethylolpropane trivinyl ether, trivinyl ether ethylene oxide adduct trivinyl ether (molar number of added ethylene oxide: 3), pentaerythritol trivinyl ether, and ditrimethylolpropane hexavinyl ether, and oxyethylene adducts thereof.

Examples of the epoxy compound include monofunctional epoxy compounds including allyl glycidyl ether, 2-ethyl hexyl glycidyl ether, phenol (polyethyleneoxy) 5-glycidyl ether, butyl phenyl glycidyl ether, diglycidyl hexahydrophthalate, lauryl glycidyl ether, 1,2-epoxy cyclohexane, 1,4-epoxy cyclohexane, 1,2-epoxy-4-vinyl cyclohexane, and norbornene oxide, bifunctional epoxy compounds including neopentyl glycol diglycidyl ether and 1,6 hexanediol diglycidyl ether, and trifunctional or higher functional epoxy compounds including polyglycerol triglycidyl ether, sorbitol polyglycidyl ether, and pentaerythritol polyglycidyl ether.

Examples of the oxetane compound include monofunctional oxetane compounds including 2-(3-oxetanyl)-1-butanol, 3-(2-(2-ethyl hexyloxyethyl))-3-ethyl oxetane, and 3-(2-phenoxyethyl)-3-ethyl oxetane, and polyfunctional oxetane compounds including xylylene bisoxetane and 3,3'-(oxybismethylene)bis(3-ethyl oxetane).

### 1-1-2. Gelling Agent

The gelling agent is organic matter that is solid at normal temperature and turns into liquid when heated. From the viewpoint of more easily controlling the ejectability of a solated ink and the pinning properties caused by gelation of the ink landed on a recording medium, the melting point of the gelling agent is preferably 30°C or more and less than 150°C.

The content of the gelling agent is preferably 0.5mass% or more and 10.0mass% or less based on the total mass of the gel ink. When the content of the gelling agent is set at 0.5mass% or more, the pinning properties of the gel ink is sufficiently raised and liquid bias caused by combining of dots is suppressed. It is thus possible to reduce generation of regions in which the cured film is not formed and to further reduce occurrence of gloss non-uniformity. When the content of the gelling agent is set at 0.5mass% or more, it is also possible to further enhance the flexibility of the cured film and to further enhance the bend cracking resistance of an image. Meanwhile, when the content of the gelling agent is set at 10.0mass% or less, the gelling agent is less likely to precipitate on the surface of an image formed. Additionally, it is possible to make the gloss of the image closer to the gloss of the image formed with other inkjet inks and to enhance the ejectability from an inkjet head.

Meanwhile, from the viewpoint of making inhibition of radiation transmission due to the gelling agent further less likely to occur, making the difference in the curing rate between the surface and the inside of droplets smaller, and making gloss non-uniformity less likely to occur, the content of the gelling agent in the gel ink is preferably less than 5.0mass%, more preferably 3.0mass% or less.

From the viewpoint of making the difference in the curing rate smaller while suppressing precipitation of the above gelling agent to further optimize the gloss of an image, the content of the gelling agent is preferably 0.5mass% or more and less than 5.0mass%, more preferably 1.0mass% or more and 3.0mass% or less based on the total mass of the gel ink.

Also from the viewpoint below, the gelling agent is preferably one that may form a structure in which the photocurable compound is encapsulated in a three-dimensional space formed by the gelling agent crystallized in a plate form at a temperature equal to or lower than the gelling temperature of the gel ink (this structure is referred to as a "card house structure" hereinafter).

In the case where a card house structure is formed from the gelling agent in the droplets of the gel ink after landed on a recording medium, the card house structure provides steric hindrance on polymerization and crosslinking of the photocurable compound by irradiation with radiation, and thus, a dense crosslinking structure is less likely to be formed. For this reason, the gelling agent that forms the card house structure can make a cured film formed by curing of the gel ink more flexible and further enhance the bend cracking resistance of an image including the above cured film.

Also, in the case where a card house structure is formed from the gelling agent in droplets of the gel ink immediately after landed on a recording medium, the liquid photocurable compound is retained in the space, and thus the gel ink droplets are less likely to wet spread to thereby further enhance the pinning properties of the gel ink. With enhanced pinning properties of the gel ink, the gel ink droplets landed on the recording medium are less likely to coalesce to one another to thereby enable formation of a higher definition image.

In order to form a card house structure, the photocurable compound and the gelling agent are preferably compatible to each other in the gel ink. When the photocurable compound and the gelling agent are compatible to each other, the gelling agent crystallizes further inside the cured film. Then, blooming, which is caused by crystallization of the gelling agent in the vicinity of the surface of the cured film, is less likely to occur.

Examples of the gelling agents suitable for formation of the card house structure by crystallization include ketone waxes, ester waxes, petroleum waxes, plant waxes, animal waxes, mineral waxes, hydrogenated castor oil, modified waxes, higher fatty acids, aliphatic alcohols, hydroxystearic acid, fatty acid amides including N-substituted fatty acid amides and specialty fatty acid amides, higher amines, sucrose fatty acid esters, synthetic waxes, dibenzylidene sorbitols, dimeric acid, and dimer diols.

Examples of the ketone waxes include dilignoceryl ketone, dibehenyl ketone, distearyl ketone, dieicosyl ketone, dipalmityl ketone, dilauryl ketone, dimyristyl ketone, myristyl palmityl ketone, and palmityl stearyl ketone
Examples of the ester waxes include behenyl behenate, icosyl icosanoate, stearyl stearate, palmityl stearate, cetyl palmitate, myristyl myristate, cetyl myristate, myricyl cerotate, stearyl stearate, oleyl palmitate, glycerin fatty acid esters, sorbitan fatty acid esters, propylene glycol fatty acid esters, ethylene glycol fatty acid esters, and polyoxyethylene fatty acid esters.

Examples of commercially available products of the ester waxes include EMALEX series manufactured by Nihon Emulsion Co., Ltd. ("EMALEX" is a registered trademark of the company.) and RIKEMAL series and POEM series manufactured by Riken Vitamin Co., Ltd. (both "RIKEMAL" and "POEM" are registered trademarks of the company).

Examples of the petroleum waxes include petroleum waxes including paraffin wax, microcrystalline wax, and petrolatum.

Examples of the plant waxes include candelilla wax, carnauba wax, rice wax, sumac wax, jojoba oil, solid jojoba wax, and jojoba ester.

Examples of the animal waxes include beeswax, lanolin, and spermaceti.

Examples of the mineral waxes include montan wax and hydrogenated wax.

Examples of the modified waxes include montan wax derivatives, paraffin wax derivatives, microcrystalline wax derivatives, 12-hydroxystearic acid derivatives, and polyethylene wax derivatives.

Examples of the higher fatty acids include behenic acid, arachidic acid, stearic acid, palmitic acid, myristic acid, lauric acid, oleic acid, and erucic acid.

Examples of the aliphatic alcohols include stearyl alcohol and behenyl alcohol.

Examples of the hydroxystearic acids include 12-hydroxystearic acid.

Examples of the fatty acid amides include lauric acid amide, stearic acid amide, behenic acid amide, oleic acid amide, erucic acid amide, ricinoleic acid amide, and 12-hydroxystearic acid amide.

Examples of commercially available products of the fatty acid amides include NIKKA AMIDE series manufactured by Nippon Kasei Chemical Co., Ltd. ("NIKKA AMIDE" is a registered trademark of the company.), ITOWAX series manufactured by Itoh Oil Chemicals Co., Ltd., and FATTY AMID series manufactured by Kao Corporation.

Examples of the N-substituted fatty acid amides include N-stearyl stearic acid amide and N-oleyl palmitic acid amide.

Examples of the specialty fatty acid amides include N,N'-ethylene bisstearylamide, N,N'-ethylene bis-12-hydroxystearylamide, and N,N'-xylylene bisstearylamide.

Examples of the higher amines include dodecylamine, tetradecylamine, and octadecylamine.

Examples of the sucrose fatty acid esters include sucrose stearic acid and sucrose palmitic acid.

Examples of commercially available products of the sucrose fatty acid esters include RYOTO Sugar Ester series manufactured by Mitsubishi-Kagaku Foods Corporation ("RYOTO" is a registered trademark of the company.).

Examples of the synthetic waxes include polyethylene wax and α-olefin-maleic anhydride copolymer wax.

Examples of commercially available products of the synthetic waxes include UNILIN series manufactured by Baker-Petrolite ("UNILIN" is a registered trademark of the company.).

Examples of the dibenzylidene sorbitols include 1,3:2,4-bis-O-benzylidene-D-glucitol.

Examples of commercially available products of the dibenzylidene sorbitols include GELALL D manufactured by New Japan Chemical Co., Ltd. ("GELALL" is a registered trademark of the company.).

Examples of commercially available products of the dimer diols include PRIPOR series manufactured by CRODA International Plc ("PRIPOR" is a registered trademark of the company.).

Of these gelling agents, from the viewpoint of making the property of transmitting radiation higher to make transmission of radiation less likely to be inhibited and to make gloss non-uniformity less likely to occur, the gelling agent is preferably an aliphatic ester or aliphatic ketone having a linear alkyl group containing 12 or more carbon atoms. In the aliphatic ester or aliphatic ketone, it is only required that only one carbon chain of two carbon chains sandwiching the ketone group or ester group is a linear alkyl group containing 12 or more carbon atoms. From the viewpoint of more easily achieving the effect, both the two carbon chains are preferably linear alkyl groups that satisfy the requirement of the number of carbon atoms. The aliphatic ester or aliphatic ketone having 12 or more carbon atoms has high crystallinity and allows a more sufficient space to be formed in the above card house structure. Accordingly, it is conceived that the gelling agent, when crystallized, is likely to transmit radiation and makes the gloss non-uniformity of the image less likely to occur. Only one aliphatic ester or aliphatic ketone or two or more aliphatic esters or aliphatic ketones may be contained in the gel ink. Only either one of or both the aliphatic ester and aliphatic ketone may be contained in the gel ink.

Meanwhile, from the viewpoint of making the card house structure more likely to be formed by making the photocurable compound and the gelling agent likely to be compatible with each other, the number of carbon atoms is preferably 25 or less.

Examples of the aliphatic esters having a linear alkyl group containing 12 or more and 25 or less carbon atoms include behenyl behenate (number of carbon atoms: 21-22), icosyl icosanoate (number of carbon atoms: 19-20), behenyl stearate (number of carbon atoms: 17-21), stearyl stearate (number of carbon atoms: 17-18), palmityl stearate (number of carbon atoms: 17-16), lauryl stearate (number of carbon atoms: 17-12), cetyl palmitate (number of carbon atoms: 15-16), stearyl palmitate (number of carbon atoms: 15-18), myristyl myristate (number of carbon atoms: 13-14), cetyl myristate (number of carbon atoms: 13-16), octyldodecyl myristate (number of carbon atoms: 13-20), stearyl oleate (number of carbon atoms: 17-18), stearyl erucate (number of carbon atoms: 21-18), stearyl linoleate (number of carbon atoms: 17-18), behenyl oleate (number of carbon atoms: 18-22), and arachidyl linoleate (number of carbon atoms: 17-20). The numbers of carbon atoms in the above parentheses each represent the number of carbon atoms of each of two hydrocarbon groups separated by the ester group.

Examples of commercially available products of the aliphatic esters having a linear alkyl group containing 12 or more and 25 or less carbon atoms include UNISTER M-2222SL and SPERMACETI manufactured by NOF Corporation ("UNISTER" is a registered trademark of the company.), EXCEPARL SS and EXCEPARL MY-M manufactured by Kao Corporation ("EXCEPARL" is a registered trademark of the company.), EMALEX CC-18 and EMALEX CC-10 manufactured by NIHON EMULSION Co., Ltd. ("EMALEX" is a registered trademark of the company.), and AMREPS PC manufactured by Kokyu Alcohol Kogyo Co., Ltd. ("AMREPS" is a registered trademark of the company.). These commercially available products, which are often mixtures of two or more esters, may be separated and purified, as required, before added to the gel ink.

Examples of the aliphatic ketones having a linear alkyl group containing 12 or more and 25 or less carbon atoms include dilignoceryl ketone (number of carbon atoms: 23-23), dibehenyl ketone (number of carbon atoms: 21-21), distearyl ketone (number of carbon atoms: 17-17), dieicosyl ketone (number of carbon atoms: 19-19), dipalmityl ketone (number of carbon atoms: 15-15), dimyristyl ketone (number of carbon atoms: 13-13), lauryl myristyl ketone (number of carbon atoms: 11-14), lauryl palmityl ketone (number of carbon atoms: 11-16), myristyl palmityl ketone (number of carbon atoms: 13-16), myristyl stearyl ketone (number of carbon atoms: 13-18), myristyl behenyl ketone (number of carbon atoms: 13-22), palmityl stearyl ketone (number of carbon atoms: 15-18), palmityl behenyl ketone (number of carbon atoms: 15-22), and stearyl behenyl ketone (number of carbon atoms: 17-22). The numbers of carbon atoms in the above parentheses each represent the number of carbon atoms of each of two hydrocarbon groups separated by the carbonyl group.

Examples of commercially available products of the aliphatic ketones having a linear alkyl group containing 12 or more and 25 or less carbon atoms include 18-Pentatriacontanon and Hentriacontan-16-on manufactured by Alfa Aeser and KAO Wax T1 manufactured by Kao Corporation. These commercially available products, which are often mixtures of two or more ketones, may be separated and purified, as required, before added to the gel ink.

A gelling agent having a photocurable functional group, which contributes itself to formation of a crosslinking structure, does not sufficiently achieve an effect of imparting flexibility to the cured film described above. For this reason, a cured film formed from a gel ink containing a gelling agent having this photocurable functional group has extremely high hardness and is more likely to undergo bend cracking. From the viewpoint of suppressing occurrence of bend cracking, the gelling agent contained in the gel ink preferably includes no photocurable functional group.

### 1-1-3. Other Components

The gel ink may additionally contain other components including a photopolymerization initiator, colorant, dispersant, photosensitizer, polymerization inhibitor, and surfactant, besides the components described above, as long as the gloss non-uniformity of an image is not markedly increased. Only one of such components or two or more such components may be contained in the gel ink.

### 1-1-3-1. Photopolymerization Initiator

The photopolymerization initiator contains a photoradical initiator when the above photocurable compound is a compound having a radical polymerizable functional group, and contains a photoacid generating agent when the above photocurable compound is a compound having a cationic polymerizable functional group. Only one photopolymerization initiator or two or more photopolymerization initiators may be contained in the ink of the present invention. The photopolymerization initiator may be a combination of both a photoradical initiator and a photoacid generating agent.

The photoradical initiator includes a cleaving-type radical initiator and a hydrogen abstraction-type radical initiator.

Examples of the cleaving-type radical initiator include acetophenone initiators, benzoin initiators, acyl phosphine oxide initiators, benzyl, and methylphenyl glyoxy ester.

Examples of the hydrogen abstraction-type radical initiator include benzophenone initiators, thioxanthone initiators, aminobenzophenone initiators, 10-butyl-2-chloro-acridone, 2-ethylanthraquinone, 9,10-phenanthrenequinone, and camphor quinone.

Examples of the photoacid generating agents include triaryl sulfonium hexafluorophosphate, iodonium(4-methylphenyl)(4-(2-methylpropyl)phenyl)hexafluorophosphate, triaryl sulfonium hexafluoroantimonate, and 3-methyl-2-butenyl tetramethylene sulfonium hexafluoroantimonate.

Radiation used in the present embodiment, which has a large amount of energy, can start polymerization and crosslinking of a gel ink even if the ink contains a smaller amount of a photopolymerization initiator or contains substantially no photopolymerization initiator, unlike in the case of irradiation with UV. When the amount of the photopolymerization initiator contained in the gel ink is smaller, or the gel ink contains substantially no photopolymerization initiator, it is possible to reduce residues of an unreacted photopolymerization initiator or the photopolymerization initiator after the reaction and suppress occurrence of odors derived from the above residues. From the viewpoint of suppressing the occurrence of odors described above, the content of the photopolymerization initiator is preferably less than 0.1mass% based on the total mass of the gel ink or, more preferably, substantially no photopolymerization initiator is contained.

### 1-1-3-2. Colorants

### Colorants include dyes and pigments.

From the viewpoint of obtaining an image having satisfactory weatherability, the colorant is preferably a pigment. The pigment can be selected from, for example, yellow (yellow) pigments, red or magenta pigments, blue or cyan pigments, and black pigments, depending on the color and the like of an image to be formed.

Examples of the yellow pigment include C. I. Pigment Yellow (hereinbelow, also simply referred to as "PY") 1, PY3, PY12, PY13, PY14, PY17, PY34, PY35, PY37, PY55, PY74, PY81, PY83, PY93, PY94, PY95, PY97, PY108, PY109, PY110, PY137, PY138, PY139, PY153, PY154, PY155, PY157, PY166, PY167, PY168, PY180, PY185, and PY193.

Examples of the red or magenta pigment include C. I. Pigment Red (hereinbelow, also simply referred to as "PR") 3, PR5, PR19, PR22, PR31, PR38, PR43, PR48: 1, PR48: 2, PR48: 3, PR48: 4, PR48: 5, PR49: 1, PR53: 1, PR57: 1, PR57: 2, PR58: 4, PR63: 1, PR81, PR81: 1, PR81: 2, PR81: 3, PR81: 4, PR88, PR104, PR108, PR112, PR122, PR123, PR144, PR146, PR149, PR166, PR168, PR169, PR170, PR177, PR178, PR179, PR184, PR185, PR208, PR216, PR226, and PR257, C. I. Pigment Violet (hereinbelow, also simply referred to as "PV") 3, PV19, PV23, PV29, PV30, PV37, PV50, and PV88, and C. I. Pigment Orange (hereinbelow, also simply referred to as "PO") 13, PO16, PO20, and PO36.

Examples of the blue or cyan pigment include C. I. Pigment Blue (hereinbelow, also simply referred to as "PB") 1, PB15, PB15: 1, PB15: 2, PB15: 3, PB15: 4, PB15: 6, PB16, PB17-1, PB22, PB27, PB28, PB29, PB36, and PB60.

Examples of the green pigment include C. I. Pigment Green (hereinbelow, also simply referred to as "PG") 7, PG26, PG36, and PG50.

Examples of the black pigment include C. I. Pigment Black (hereinbelow, also simply referred to as "PBk") 7, PBk26, and PBk28.

The content of the colorant is not particularly limited and can be 1mass% or more and 10mass% or less based on the total mass of the gel ink, for example. Radiation used in the present embodiment, which has a large amount of energy, can sufficiently cure droplets to the inside thereof even in the case in which the content of the colorant is higher. For example, in the case where the gel ink contains a black pigment and the content of the black pigment is 3mass% or more and 10mass% or less based on the total mass of the gel ink, it is not possible to sufficiently cure the droplets of the gel ink by irradiation with UV. Irradiation with radiation, however, can sufficiently cure even the droplets of a gel ink containing such an amount of a black pigment. For this reason, it is possible to increase the amount of a colorant to be added to the substrate to thereby to make the tone of an image more vivid by making the film thickness of a cured film to be formed larger than that in a conventional image forming method. Meanwhile, it is also possible to further enhance the bend cracking resistance of an image while the tone of an image is made to be comparable with that of an image formed by a conventional image forming method by making the film thickness of a cured film to be formed comparable with that in a conventional image forming method.

### 1-1-3-3. Additional Notes

Examples of the dispersants include hydroxy group-containing carboxylate esters, salts of esters of a long chain polyaminoamide and a high molecular weight acid, salts of high molecular weight polycarboxylic acid, salts of esters of a long chain polyaminoamide and a polar acid, high molecular weight unsaturated acid esters, macromolecular copolymers, modified polyurethane, modified polyacrylate, polyether ester-type anionic active agents, naphthalenesulfonic acid-formalin condensate salts, aromatic sulfonic acid-formalin condensate salts, polyoxyethylene alkyl phosphate esters, polyoxyethylene nonylphenylether, and stearylamine acetate.

The content of the dispersant can be 20mass% or more and 70mass% or less based on the total mass of the pigment, for example.

Examples of the polymerization inhibitor include (alkyl)phenol, hydroquinone, catechol, resorcin, p-methoxyphenol, t-butyl catechol, t-butyl hydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferrone, aluminum N-nitrosophenyl hydroxylamine, tri-p-nitrophenylmethyl, N-(3-oxyanilino-1,3-dimethylbutylidene)aniline oxide, dibutyl cresol, cyclohexanone oxime cresol, guaiacol, o-isopropylphenol, butyraldoxime, methyl ethyl ketoxime, and cyclohexanone oxime.

Examples of the surfactants include anionic surfactants such as dialkyl sulfosuccinic acid salts, alkylnaphthalenesulfonic acid salts, and fatty acid salts, nonionic surfactants such as polyoxyethylene alkyl ethers, polyoxyethylene alkyl aryl ethers, acetylene glycols, and polyoxyethylene-polyoxypropylene block copolymers, cationic surfactants such as alkylamine salts and quaternary ammonium salts, silicone-based and fluorine-based surfactants.

Examples of commercially available products of the silicone-based surfactants include KF-351A, KF-352A, KF-642, and X-22-4272 manufactured by Shin-Etsu Chemical Co., Ltd., BYK 307, BYK 345, BYK 347, and BYK 348 manufactured by BYK-Chemie GmbH ("BYK" is a registered trademark of the company), and TSF 4452 manufactured by Toshiba Silicone Co., Ltd.

The content of the surfactant is preferably 0.001mass% or more and less than 1.0mass% based on the total mass of a primer.

### 1-1-4. Physical Properties

From the viewpoint of enhancing the ejectability from inkjet heads, the viscosity of the gel ink at 80°C is preferably 3 mPa·s or more and 20 mPa·s or less. From the viewpoint of allowing the ink to gel sufficiently when the temperature decreases to normal temperature after landing, the viscosity of the gel ink at 25°C is preferably 1,000 mPa·s or more.

The gelling temperature of the gel ink is preferably 40°C or more and less than 100°C. When the gelling temperature of the ink is 40°C or more, the ink rapidly gels after landing on a recording medium, and thus the pinning properties are further enhanced. When the gelling temperature of the ink is less than 100°C, it is possible to eject the ink that has undergone gellation by heating from inkjet heads to thereby enable the ink to be ejected in a more stable manner. From the viewpoint of enabling the ink to be ejected at a lower temperature and reducing the load on the image forming apparatus, the gelling temperature of the gel ink is preferably 40°C or more and less than 70°C.

The viscosity at 80°C, viscosity at 25°C, and gelling temperature of the gel ink can be determined by measuring temperature-dependent changes in dynamic viscoelasticity of the ink with a rheometer. In the present invention, the viscosities and gelling temperature are values obtained by the following method. The gel ink is heated to 100°C and then cooled to 20°C under conditions of a shear rate of 11.7 (1/s) and a temperature lowering rate of 0.1°C/s while the viscosity is measured with a stress-controlled rheometer Physica MCR 301 (cone plate diameter: 75 mm, cone angle: 1.0°) manufactured by Anton Paar GmbH, and thus a temperature-dependent viscosity change curve is obtained. The viscosity at 80°C and the viscosity at 25°C can be determined by reading the viscosity each at 80°C and 25°C on the temperature-dependent viscosity change curve. The gelling temperature can be determined as a temperature at which the viscosity reaches 200 mPa·s on the temperature-dependent viscosity change curve.

From the viewpoint of enhancing the ejectability from inkjet heads, when the gel ink contains a pigment, it is preferred that the average particle size of pigment particles be 0.08 µm or more and 0.5 µm or less and the maximum particle size be 0.3 µm or more and 10 µm or less. The average particle size of pigment particles of the present invention means a value determined by the dynamic light scattering method using Zetasizer Nano ZSP manufactured by Malvern Instruments Ltd. A colorant-containing ink is highly dense, and this measurement apparatus cannot transmit light through such an ink. Then, the measurement is performed after diluting the ink 200 times. The measurement temperature is set to normal temperature (25°C).

### 1-2. Gelation Step

In the present step, droplets of the gel ink are ejected from a nozzle of an inkjet head and landed on a recording medium. The gel ink is heated and ejected in a gelled state, and when landed on a recording medium, is cooled and undergoes gelation.

In the present step, droplets of a plurality of gel inks each having a different composition are each landed on a recording medium. The plurality of gel inks described above is only required to have a different composition, but the gel inks preferably contain a different colorant and each exhibit the different color in an image. For example, the plurality of gel inks described above can be a combination of four gel inks that contains colorants to exhibit yellow, magenta, cyan, and black or a combination of five or more gel inks that includes a gel ink containing a colorant to exhibit other special color. The plurality of gel inks may contain a clear ink, which contains substantially no colorant.

The plurality of gel inks is preferably ejected in an amount such that a total amount adhering to the substrate reaches 1 g/m² or more and 10 g/m² or less. In the case where the total amount adhering reaches 20 g/m² or more and 40 g/m² or less, it is difficult to sufficiently cure all the droplets of the gel ink by irradiation with UV. Irradiation with radiation, however, can sufficiently cure even the droplets of the gel inks in such an amount adhering. For this reason, it is possible to make the tone of an image more vivid by increasing the amount of the gel ink adhering to thereby make the film thickness of a cured film to be formed larger than that in a conventional image forming method. Meanwhile, it is also possible to further enhance the bend cracking resistance of an image while the tone of an image is made to be comparable with that of an image formed by a conventional image forming method by making the amount of the gel ink adhering (the film thickness of a cured film to be formed) comparable with that in a conventional image forming method. In other words, it is possible to optionally adjust the amount of the plurality of gel inks to be ejected in the range where a total amount adhering to the substrate reaches 1 g/m² or more and 40 g/m² or less.

The inkjet heads may be either of on-demand mode or continuous inkjet heads. Examples of the on-demand mode inkjet heads include electromechanical conversion-mode inkjet heads, such as single cavity-type, double cavity-type, bender-type, piston-type, shear mode-type, and shared wall-type, and electrothermal conversion-mode inkjet heads, such as thermal inkjet-type and Bubble Jet-type ("Bubble Jet" is a registered trademark of Canon Inc.).

The inkjet heads may be either of scan-type or line-type inkjet heads.

Any of the plurality of gel inks described above is heated to a temperature higher than the gelling temperature and ejected. In this case, an ink tank, an inkjet head, and an ink flow path connecting the ink tank to the inkjet head are heated. Then, a gel ink is allowed to flow from the ink tank to the inkjet head and can be ejected from the nozzle of the inkjet head.

The plurality of gel inks is ejected in a predetermined sequence by each color, but two or more gel inks may be simultaneously ejected, unless image collapse due to coalescence of droplets or the like becomes marked.

Recording media are only required to be media on which an image can be formed by an inkjet method, and examples thereof include absorbing media including coated papers such as art paper, coated paper, lightweight coated paper, fine coated paper, and cast paper and uncoated paper, non-absorbing recording media (plastic substrates) made of plastics including polyester, polyvinyl chloride, polyethylene, polyurethane, polypropylene, acrylic resin, polycarbonate, polystyrene, acrylonitrile-butadiene-styrene copolymers, polyethylene terephthalate, and polybutadiene terephthalate, and non-absorbing inorganic recording media such as metals and glass. Of these, preferred are polyester, polyethylene, polyurethane, polypropylene, and acryl resins, which are less likely to deteriorate by radiation.

The thickness of the recording medium is not particularly limited. According to the method of the present invention, with a recording medium having a large thickness (e.g., a recording medium having a thickness of 0.6 mm or more or a recording medium having a thickness of 0.9 mm or more, or the like), it is possible to suitably enhance the bend cracking resistance.

The recording medium may be warmed at a temperature at which the gel ink may be cooled to its gelling temperature or less. The time required for gelation of the droplets of the gel ink landed is adjusted and spreading of the gelled droplets of the gel ink is adjusted by adjusting the temperature of the recording medium in the range described above to thereby enable to adjust the size of dots forming an image to be adjusted, the dots being derived from the gel ink. The size of the dots may be large enough not to cause combining of the dots or liquid bias, for example.

### 1-3. Curing Step

In the present step, the gelled droplets of the plurality of gel inks described above are simultaneously irradiated with radiation to cure the droplets.

In the present step, it is only required to simultaneously irradiate the droplets of two or more gel inks with radiation. Under this limit, when three gel inks are used to form an image, the droplets of two or more gel inks may be simultaneously irradiated with radiation, and the droplets of the other gel ink may be separately irradiated with radiation. However, it is preferable to simultaneously irradiate the droplets of all the gel inks for use in image formation with radiation.

The radiation described above may be corpuscular radiation including α rays, β rays, and electron beams, or may be electromagnetic radiation including γ rays and X rays. Of these, from the viewpoint of increasing the processing speed, electron beams having a higher dose rate are preferred. Note that UV is not included in radiation.

The energy of radiation (in the case of corpuscular radiation, the kinetic energy of helium atomic nucleus, electrons, or the like, in the case of electromagnetic radiation, electromagnetic energy) is such that gloss non-uniformity is made less likely to occur by allowing sufficient energy to reach the inside of the gel ink to induce polymerization and crosslinking of a photocurable compound as well as such that no marked degradation is generated in the recording medium. For example, in the case of electron beams, from the viewpoint of making gloss non-uniformity less likely to occur, the accelerating voltage is preferably 40 kV or more. From the viewpoint of suppressing deterioration of the recording medium, the accelerating voltage is preferably less than 150 kV.

The curing step is preferably performed under a low-oxygen atmosphere such that radiation does not decompose oxygen to thereby generate harmful ozone. Specifically, the oxygen concentration on performing the curing step is preferably 0.1vol% or more and 10.0vol% or less, more preferably 0.5vol% or more and 8.0vol% or less, further preferably 0.5vol% or more and 6.0vol% or less.

The ink is irradiated with radiation preferably between 0.001 seconds or more and 2.0 seconds or less after the ink is landed, and from the viewpoint of forming a higher-definition image, more preferably between 0.001 seconds or more and 1.0 seconds or less thereafter.

### 2. Image Forming Apparatus

Another embodiment of the present invention relates to an inkjet image forming apparatus with which the method described above can be implemented. FIG. 1 is a side view showing the concept of inkjet image forming apparatus 100 according to the present embodiment.

As shown in FIG. 1, image forming apparatus 100 has ink tank 110, ink flow path 120, inkjet head 130, conveying section 140, and irradiation section 150. Image forming apparatus 100 may further include oxygen concentration adjusting section 160.

### 2-1. Ink Tank 110

Ink tank 110 is a tank that is provided for each color of gel ink to store a gel ink before ejection. Ink tank 110 may include a temperature adjusting section, which heats a gel ink to adjust the viscosity of the gel ink when the gel ink is allowed to flow through ink flow path 120 to inkjet head 130. Ink tank 110 may also include a stirring blade that stirs the gel ink stored to suppress precipitation of components and the like.

### 2-2. Ink Flow Path 120

Ink flow path 120 connects ink tank 110 with inkjet head 130 so as to allow the gel ink to flow therebetween. Ink flow path 120 may include a temperature adjusting section that suppresses flow failure due to an increase in the viscosity of the flowing gel ink.

### 2-3. Inkjet Head 130

Inkjet head 130 has nozzle faces 134, on each of which an ejection port of each of nozzles 132 is provided, on a face opposed to conveying section 140 when an image is formed, ejecting inks onto recording medium 200 to be conveyed by conveying section 140. From the viewpoint of enhancing the ejectability by solating the inks of the present invention, inkjet head 130 may have a temperature adjusting section that suppresses flow failure due to an increase in the viscosity of the gel ink.

Examples of the temperature adjusting section possessed by ink tank 110, ink flow path 120, and inkjet head 130 include a panel heater, a ribbon heater, and a heating section by means of hot water.

Inkjet head 130 may be a scan-type inkjet head in which the width of the direction orthogonally intersecting with the conveying direction for recording medium is smaller than that of recording medium 200 or may be a line-type inkjet head in which the width of the direction orthogonally intersecting with the conveying direction for recording medium is larger than that of recording medium 200.

Nozzles 132 each has an ejection port on nozzle face 134. The number of nozzles 132 is only required to be equal to or more than the number of inks to be used for image formation (e.g., 4). When inkjet head 130 has a plurality of nozzles 132, from the viewpoint of simplifying the configuration of the apparatus for easier control, it is preferred that the plurality of nozzles 132 be disposed side by side in the conveying direction for recording medium at substantially equal intervals.

Inkjet head 130 is configured to be capable of changing the amount of ink(s) to be ejected and landed on a recording medium. For example, inkjet head 130 is configured to be capable of changing the amplitude width of a piezoelectric element or of preventing some of nozzles from ejecting ink.

Ink tank 110, ink flow path 120, and inkjet head 130 are provided individually for each gel ink having a different composition (exhibiting a different color when an image is formed).

### 2-4. Conveying Section 140

Conveying section 140 conveys recording medium 200, when an image is formed, so as to move recording medium 200 opposite to inkjet head 130, directly under the vertical direction of inkjet head 130. Conveying section 140 has driving roller 142 and driven roller 144, and conveying belt 146, for example.

Driving roller 142 and driven roller 144 are disposed so as to extend in the direction orthogonally intersecting with the conveying direction for recording medium while a predetermined interval is provided therebetween in the conveying direction for recording medium. Driving roller 142 is rotated by a driving source, not shown.

Conveying belt 146, which is a belt for conveying recording medium 200 placed thereon, is stretched over driving roller 142 and driven roller 144. Conveying belt 146 can be an endless belt formed wider than recording medium 200, for example. At this time, when the driving source rotates driving roller 142, conveying belt 146 orbits following driving roller 142 to convey recording medium 200 on conveying belt 146. From the viewpoint that recording medium 200 is adsorbed and held to make the recording medium less likely to be detached, a plurality of suction holes (not shown) may be formed in the belt face of conveying belt 146.

### 2-5. Irradiation Section 150

Irradiation section 150, having a light source that can apply radiation, irradiates the upper face of conveying section 140 with radiation from the light source. Thereby droplets of the inkjet ink landed on recording medium 200 to be conveyed are irradiated with actinic radiation to enable the droplets to be cured. Irradiation section 150 can be disposed directly on conveying section 140 in the downstream side of inkjet head 130.

Irradiation section 150 may have a light source that has a light emitting surface wider than recording medium 200 and irradiates simultaneously the entire surface of recording medium 200 with radiation. Irradiation section 150 may have a light source, in which a light emitting surface having a width wider than that of recording medium 200 is disposed in the direction orthogonally intersecting with the conveying direction for recording medium 200 and continuously applies radiation in the direction in which recording medium 200 is conveyed.

Irradiation section 150 is only required to be able to apply the radiation mentioned above. For example, when the radiation is an electron beam, examples of irradiation section 150 (electron beam irradiation section) include electron beam irradiation sections of a scanning-mode, a curtain beam-mode, and a broad beam-mode. Of these, from the viewpoint of throughput, a curtain beam-mode electron beam irradiation section is preferred. Examples of the electron beam irradiation section include "Curetron EBC-200-20-30" manufactured by Nissin High Voltage Co., Ltd., "Min-EB" manufactured by AIT Co, Ltd., and EB-ENGINE manufactured by Hamamatsu Photonics K.K.

### 2-6. Oxygen Concentration Adjusting Section 160

Oxygen concentration adjusting section 160 adjusts the oxygen concentration of the atmosphere surrounding the surface of recording medium 200 on which the gel ink is landed when irradiated with actinic radiation by irradiation section 150.

The configuration of oxygen concentration adjusting section 160 is not particularly limited so long as the section can set the oxygen concentration of the above atmosphere at 0.1vol% or more and 10.0vol% or less, for example.

In FIG. 1, it is possible to configure oxygen concentration adjusting section 160 to include exhaust pipe 162 that is connected to an external exhaust apparatus or the like to thereby be capable of absorbing and exhausting the gas in the vicinity of the surface of a recording medium, and supply pipe 164 provided in the downstream side of exhaust pipe 162, which supply pipe 164 is connected to an external apparatus that generates a gas having a low oxygen concentration, such as a nitrogen gas generator, to thereby supply a gas having a low oxygen concentration in the vicinity of the surface of the recording medium. In this case, the amount to be exhausted from exhaust pipe 162 and the amount of gas to be supplied from supply pipe 164 can be adjusted to thereby adjust the oxygen concentration of the above atmosphere at 0.1vol% or more and 10.0vol% or less, for example.

The oxygen concentration adjusting section 160 may be configured to include only supply pipe 164 without exhaust pipe 162, or may be configured to include a partition wall that encloses irradiation section 150 and conveying section 140 and to adjust the amount to be exhausted from the inside of the partition wall and the amount of gas having a low oxygen concentration to be supplied to the inside to thereby adjust the oxygen concentration in the space partitioned by the partition wall and conveying section 140.

### Examples

Hereinafter, the present invention will be described specifically by way of examples, but the present invention is not construed to be limited by these Examples.

### 1. Preparation of Ink

### 1-1. Preparation of Pigment Dispersion Liquid

In a stainless beaker, 9 parts by weight of a dispersant and 71 parts by weight of a photocurable compound were placed, and heated, stirred, and dissolved for an hour while heated on a hot plate at 65°C. To the solution described above cooled to room temperature, 20 parts by weight of a pigment were added. The mixture, along with 200 g of zirconia beads having a diameter of 0.5 mm, was placed in a glass jar, which was then hermetically sealed. The mixture was dispersion-treated by means of a paint shaker. After the dispersion treatment, the zirconia beads were removed. A cyan pigment dispersion, a magenta pigment dispersion, a yellow pigment dispersion, and a black pigment dispersion were each prepared.

The pigment dispersion liquids were prepared using the following materials.

### (Dispersant)

efka 7701 manufactured by BASF SE ("efka" is a registered trademark of the company.)

### (Polyfunctional photocurable compound)

Tripropylene glycol diacrylate (containing a polymerization inhibitor of 0.2%)

### (Cyan pigment)

C.I.Pigment Blue 15:4 (manufactured by Dainichiseika Color & Chemicals Mfg. Co., Ltd., CHROMOFINE BLUE 6332JC ("CHROMOFINE" is a registered trademark of the company.))

### (Magenta pigment)

Mixed crystals of C.I.Pigment Violet 19 and C.I.Pigment Red 202 (manufactured by BASF SE, CINQUASIA Magenta RT-355D ("CINQUASIA" is a registered trademark of the company.))

### (Yellow pigment)

C.I.Pigment Yellow 185 (manufactured by BASF SE, D1155)

### (Black pigment)

C.I.Pigment Black 7 (manufactured by Mitsubishi Chemical Corporation, #52)

The dispersion treatment by means of a paint shaker was performed for four hours for preparation of the cyan pigment dispersion liquid, six hours for preparation of the magenta pigment dispersion liquid, six hours for preparation of the yellow pigment dispersion liquid, and four hours for preparation of the black pigment dispersion liquid.

### 1-2. Preparation of Inks

The following components and each of the pigment dispersion liquids were mixed in accordance with ink composition listed in the following Tables 1 to 10, and the each mixture was heated to 80°C and stirred. The solutions obtained each were filtered with a Teflon (registered trademark) 3 µm membrane filter manufactured by Advantec Toyo Kaisha, Ltd. under heating to prepare each of a yellow ink, a magenta ink, a cyan ink, and a black ink, which constitute Ink sets 1 to 10.

### (Materials for inks)

Pigment dispersion liquid Y: the yellow pigment dispersion liquid prepared as described above
Pigment dispersion liquid M: the magenta pigment dispersion liquid prepared as described above
Pigment dispersion liquid C: the cyan pigment dispersion liquid prepared as described above
Pigment dispersion liquid K: the black pigment dispersion liquid prepared as described above
Photocurable compound 1: tripropylene glycol diacrylate
Photocurable compound 2: EO-modified neopentyl glycol diacrylate
Photocurable compound 3: polyethylene glycol #600 diacrylate
Photocurable compound 4: 3PO-modified trimethylolpropane triacrylate
Photocurable compound 5: 3 EO-modified trimethylolpropane triacrylate

Gelling agent 1: a non-polymerizable gelling agent having a linear alkyl group containing 12 or more and 25 or less carbon atoms (distearyl ketone: manufactured by Kao Corporation, Kao Wax T1)
Gelling agent 2: a non-polymerizable gelling agent having a linear alkyl group containing 12 or more and 25 or less carbon atoms (behenyl stearate: manufactured by NOF Corporation, WE11)
Gelling agent 3: a non-polymerizable gelling agent having a linear alkyl group containing 12 or more and 25 or less carbon atoms (behenyl acrylate: manufactured by KOKYU ALCOHOL KOGYO CO., LTD., behenyl alcohol 80R)
Gelling agent 4: a non-polymerizable gelling agent having a linear alkyl group containing 26 or more carbon atoms (an aliphatic alcohol having 30 or more carbon atoms: manufactured by Baker Petrolite Corporation, UNILIN350 ("UNILIN" is a registered trademark of Baker Petrolite Corporation.))
Gelling agent 5: a polymerizable gelling agent obtained by reacting gelling agent 4 with acrylic acid
Polymerization inhibitor: manufactured by BASF SE, IRGASTAB UV10 ("IRGASTAB" is a registered trademark of the company.)
Surfactant: a silicone surfactant (Shin-Etsu Chemical Co., Ltd., KF352)
Photopolymerization initiator: bis(2,4,6-trimethylbenzoyl)-phenylphosphine oxide (manufactured by BASF SE, IRGACURE 819 ("IRGACURE" is a registered trademark of the company)

### [Table 1]

**Table 1: Composition of ink set 1**

| Ink set 1 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 15.4 | 7.8 | 15.9 | 16.4 |
| Gelling agent | Gelling agent 1 | 1.2 | 1.2 | 1.2 | 1.2 |
| | Gelling agent 2 | 0.8 | 0.8 | 0.8 | 0.8 |
| Polymerization inhibitor | | 0.1 | 0.1 | 0.1 | 0.1 |
| Surfactant | | 0.05 | 0.05 | 0.05 | 0.05 |

### [Table 2]

**Table 2: Composition of ink set 2**

| Ink set 2 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 16.9 | 9.4 | 17.4 | 17.9 |
| Gelling agent | Gelling agent 1 | 0.45 | 0.45 | 0.45 | 0.45 |
| Polymerization inhibitor | | 0.1 | 0.1 | 0.1 | 0.1 |
| Surfactant | | 0.05 | 0.05 | 0.05 | 0.05 |

### [Table 3]

**Table 3: Composition of ink set 3**

| Ink set 3 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 11.4 | 3.8 | 11.9 | 12.4 |
| Gelling agent | Gelling agent 1 | 3.6 | 3.6 | 3.6 | 3.6 |
| | Gelling agent 2 | 2.4 | 2.4 | 2.4 | 2.4 |
| Polymerization inhibitor | | 0.1 | 0.1 | 0.1 | 0.1 |
| Surfactant | | 0.05 | 0.05 | 0.05 | 0.05 |

### [Table 4]

**Table 4: Composition of ink set 4**

| Ink set 4 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 15.2 | 7.7 | 15.7 | 16.2 |
| Gelling agent | Gelling agent 1 | 1.2 | 1.2 | 1.2 | 1.2 |
| | Gelling agent 2 | 0.8 | 0.8 | 0.8 | 0.8 |
| Polymerization inhibitor | | 0.1 | 0.1 | 0.1 | 0.1 |
| Surfactant | | 0.05 | 0.05 | 0.05 | 0.05 |
| Photopolymerization initiator | | 0.2 | 0.2 | 0.2 | 0.2 |

### [Table 5]

**Table 5: Composition of ink set 5**

| Ink set 5 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 12.4 | 4.8 | 12.9 | 13.4 |
| Gelling agent | Gelling agent 1 | 1.2 | 1.2 | 1.2 | 1.2 |
| | Gelling agent 2 | 0.8 | 0.8 | 0.8 | 0.8 |
| Polymerization inhibitor | | 0.1 | 0.1 | 0.1 | 0.1 |
| Surfactant | | 0.05 | 0.05 | 0.05 | 0.05 |
| Photopolymerization initiator | | 3.0 | 3.0 | 3.0 | 3.0 |

### [Table 6]

**Table 6: Composition of ink set 6**

| Ink set 6 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 14.4 | 6.8 | 14.9 | 15.4 |
| Gelling agent | Gelling agent 3 | 3.0 | 3.0 | 3.0 | 3.0 |
| Polymerization inhibitor | | 0.1 | 0.1 | 0.1 | 0.1 |
| Surfactant | | 0.05 | 0.05 | 0.05 | 0.05 |

### [Table 7]

**Table 7: Composition of ink set 7**

| Ink set 7 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 14.4 | 6.8 | 14.9 | 15.4 |
| Gelling agent | Gelling agent 4 | 3.0 | 3.0 | 3.0 | 3.0 |
| Polymerization inhibitor | | 0.1 | 0.1 | 0.1 | 0.1 |
| Surfactant | | 0.05 | 0.05 | 0.05 | 0.05 |

### [Table 8]

**Table 8: Composition of ink set 8**

| Ink set 8 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 14.4 | 6.8 | 14.9 | 15.4 |
| Gelling agent | Gelling agent 5 | 3.0 | 3.0 | 3.0 | 3.0 |
| Polymerization inhibitor | | 0.1 | 0.1 | 0.1 | 0.1 |
| Surfactant | | 0.05 | 0.05 | 0.05 | 0.05 |

### [Table 9]

**Table 9: Composition of ink set 9**

| Ink set 9 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 20.0 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 15.4 | 7.8 | 15.9 | 7.8 |
| Gelling agent | Gelling agent 1 | 1.2 | 1.2 | 1.2 | 1.2 |
| | Gelling agent 2 | 0.8 | 0.8 | 0.8 | 0.8 |
| Polymerization inhibitor | | 0.1 | 0.1 | 0.1 | 0.1 |
| Surfactant | | 0.05 | 0.05 | 0.05 | 0.05 |

### [Table 10]

**Table 10: Composition of ink set 10**

| Ink set 10 | | C | M | Y | K |
|---|---|---|---|---|---|
| Pigment dispersion liquid | Cyan dispersion liquid | 12.5 | | | |
| | Magenta dispersion liquid | | 20.0 | | |
| | Yellow dispersion liquid | | | 12.0 | |
| | Black dispersion liquid | | | | 11.5 |
| Curable compound | Photocurable compound 1 | 20.0 | 20.0 | 20.0 | 20.0 |
| | Photocurable compound 2 | 15.0 | 15.0 | 15.0 | 15.0 |
| | Photocurable compound 3 | 20.0 | 20.0 | 20.0 | 20.0 |
| | Photocurable compound 4 | 15.0 | 15.0 | 15.0 | 15.0 |
| | Photocurable compound 5 | 17.4 | 9.8 | 17.9 | 18.4 |
| Polymerization inhibitor | | 0.1 | 0.1 | 0.1 | 0.1 |
| Surfactant | | 0.05 | 0.05 | 0.05 | 0.05 |

### 2. Image Formation and Evaluation

An inkjet image forming apparatus including KM1800i manufactured by Konica Minolta, Inc. (number of nozzles: 1776) was used to form images using ink sets 1 to 10 under an environment of 23°C and 55% RH, and the images were evaluated. Ink droplets used for forming one image were irradiated, after all the droplets were landed, with actinic radiation from any one of the following irradiation sources in an atmosphere having an oxygen concentration of 0.5% to thereby cure the entire droplet in a batch manner. The conveying speed was consistently 200 mm/s. All the recording media were at 35°C.

### (Recording medium)

Recording medium A: PET (thickness: 0.19 mm (manufactured by Toray Industries, Inc., Lumirror E22))
Recording medium B: coated paper (thickness: 0.46 mm, basis weight: 420 g/m² (manufactured by NIPPON PAPER INDUSTRIES CO., LTD., Ibest W))
Recording medium C: cardboard (thickness: 0.9 mm (manufactured by Crown Package Co., Ltd., Microflute, G grade))

### (Irradiation source)

EB: An electron beam was applied under the following conditions.

| | |
|---|---|
| Absorbed dose | 60 kGy |
| Tube voltage | 70 kV |
| Tube current | 1.64 mA |
| Irradiation distance | 10 mm |

UV: Ultraviolet radiation was applied under the following conditions.

| | |
|---|---|
| Wavelength | 385 nm |
| Light quantity | 500 mJ/cm² |

### 2-1. Gloss Uniformity

On the surface of the recording medium A, natural images (JIS X 9201 (2001), "fruits basket" and "cafeteria" of high-definition color digital standard image data) were formed in the A4 size.

The images formed were visually observed, and the ink sets were evaluated in accordance with the following criteria.
A: Both the images have uniform gloss.
B: A region in which the gloss was partially lowered has been observed in one of the images, but the entire gloss is uniform.
C: A region in which the gloss is partially lowered is observed in both the images, but the entire gloss is uniform.
D: Many regions in which the gloss is lowered have been observed in both the images, and the entire gloss is non-uniform.

### 2-2. Odor

Ten 4 cm × 16 cm solid images were formed, which images were each obtained by sequentially forming 4 cm × 4 cm solid images, having an amount of adhering of 9 g/m², in the order of yellow, black, magenta, and cyan on the surface of the recording medium A.

The images were separately enclosed in a glass bottle. The images were removed after 24 hours elapsed, and then, the odor remained inside each bottle was sensory evaluated by 20 panelists. Based on the results, the ink sets were evaluated in accordance with the following criteria.
A: No panelist perceived an unpleasant odor.
B: One or more and five or less panelists perceived an unpleasant odor from any of the ten images.
C: Six or more and nine or less panelists perceived an unpleasant odor from any of the ten images.
D: Ten or more panelists perceived an unpleasant odor from any of the ten images.

### 2-3. Bend Cracking Resistance

On each surface of the recording medium A to the recording medium C, a 4 cm × 16 cm solid image was formed, which image was obtained by sequentially forming 4 cm × 4 cm solid images having an amount of adhering of 9 g/m² in the order of yellow, black, magenta, and cyan.

The image obtained was left under an environment of 25°C and 60% RH for 24 hours. Then, the image was folded longitudinally in half such that the surface on which the solid image corresponded to the mountain side and a fold was formed on the solid image of each color. Thereafter, cellophane tape (manufactured by 3M) was attached to the folded portion, and slowly peeled off. Based on the folded portion after the tape was peeled off, the ink sets were evaluated in accordance with the following criteria.
A: No exfoliation of the cured ink from the folded surface was observed in any of the recording media.
B: A slight exfoliation of the cured ink from the folded surface was observed in any of the recording media.
C: A large exfoliation of the cured ink from the folded surface was observed in any of the recording media.

Evaluation results of ink sets 1 to 10 are shown in Table 11.

### [Table 11]

**Table 11: Evaluation results**

| | Ink set No. | Irradiation source | Evaluation results | | |
|---|---|---|---|---|---|
| | | | Gloss uniformity | Odor | Bend cracking resistance |
| Image 1 | 1 | EB | A | A | A |
| Image 2 | 2 | EB | B | A | B |
| Image 3 | 3 | EB | C | A | A |
| Image 4 | 4 | EB | A | B | A |
| Image 5 | 5 | EB | A | C | A |
| Image 6 | 6 | EB | B | A | A |
| Image 7 | 7 | EB | B | A | A |
| Image 8 | 8 | EB | B | A | B |
| Image 9 | 9 | EB | A | A | A |
| Image 10 | 5 | UV | D | D | B |
| Image 11 | 9 | UV | (Not sufficiently cured) | | |
| Image 12 | 1 | UV | (Not sufficiently cured) | | |
| Image 13 | 10 | EB | D | A | C |

Images 1 to 9, which were formed by irradiating droplets of the gel ink landed on the recording medium with radiation to cure the droplets described above, each exhibited a small gloss difference among regions in the image, had a slight odor, and provided high bend cracking resistance, even when formed by batch irradiation.

Particularly, images 1 to 3 and images 6 to 9, respectively formed with ink sets 1 to 3 and ink sets 6 to 9, which had a content of the photopolymerization initiator of less than 0.1mass%, had a slighter odor. It is conceived that this odor is derived from the residues of the photopolymerization initiator (images 4 and 5) because a larger content of the photopolymerization initiator resulted in a larger amount of the odor.

Image 1, formed with ink set 1, which had a content of the gelling agent of 0.5mass% or more and less than 5.0mass%, exhibited a smaller gloss difference among regions in the image and had higher bend cracking resistance than those of image 2, formed with ink set 2, which had a content of the gelling agent of less than 0.5mass%. It is conceived that this is because the gelling agent enhanced the pinning properties of the gel ink droplets and thus, liquid bias caused by combining of dots was less likely to occur, and the gelling agent also enhanced the flexibility of the cured film.

Additionally, image 1, formed with ink set 1, which had a content of the gelling agent of 0.5mass% or more and less than 5.0mass%, exhibited a smaller gloss difference among regions in the image than that of image 3, formed with ink set 3, which had a content of the gelling agent of more than 5.0mass%. It is conceived that this is because inhibition of radiation transmission due to the gelling agent was less likely to occur and the difference in the curing rate between the surface and the inside of the droplets was smaller.

Image 1, formed with ink set 1, in which the gelling agent is an aliphatic ester or aliphatic ketone having a linear alkyl group containing 12 or more carbon atoms in the main chain thereof, had smaller gloss difference among regions in the image than that of image 6, formed with ink set 6 containing a gelling agent other than that. It is conceived that this is because the gelling agent was more likely to crystallize, a card house structure having a more sufficient space was formed, and thus radiation became likely to penetrate the gelling agent.

Image 7, formed with ink set 7, which contains a gelling agent having no photocurable functional group, had higher bend cracking resistance than that of image 8, formed with ink set 8, which contains a gelling agent having a photocurable functional group. It is conceived that this is because the gelling agent does not contribute to formation of the crosslinking structure and sufficiently achieved an effect of imparting flexibility to the cured film.

Particularly, even with ink set 9, which contains an increased content of the black pigment, it was possible to form image 9 by curing droplets by irradiation with radiation.

In contrast, image 10, formed by UV batch irradiation using ink set 5, which contains the photopolymerization initiator sufficiently, had a gloss difference among regions in the image and resulted a larger amount of the odor.

In an attempt to obtain an image by UV batch irradiation using ink set 9, which contains an increased content of the black pigment, or ink set 1, which contains no photopolymerization initiator, ink droplets were not sufficiently cured, and it was not possible to obtain images for evaluation.

Image 13, obtained by batch irradiation with radiation using ink set 10, which contains no gelling agent, had a gloss difference among regions in the image and had low bend cracking resistance.

The present application claims the priority based on Japanese Patent Application No. 2017-095431 filed on May 12, 2017, and the contents described in the claims, specification, and drawing of such an application are herein incorporated.

### Industrial Applicability

According to the image forming method of the present invention, the capability of forming images by batch irradiation is useful for downsizing of inkjet image forming apparatuses and cost-cutting for image formation. Simultaneously, it is possible to form images having more uniform gloss among regions. Accordingly, the present invention is expected to broaden applications of image formation by inkjet methods and to contribute to development and proliferation of the techniques of the field.

### Reference Signs List

100 Image forming apparatus
110 ink tank
120 ink flow path
130 Inkjet head
132 Nozzle
134 Nozzle face
140 Conveying section
142 Driving roller
144 Driven roller
146 Conveying belt
150 Irradiation section
160 Oxygen concentration adjusting section
162 Exhaust pipe
164 Supply pipe
200 recording medium

## Claims

1. An image forming method, comprising:
ejecting droplets of a plurality of actinic radiation curable inkjet inks from a nozzle of an ejection head and landing each droplet on a surface of a recording medium to cause all the droplets of the plurality of inkjet inks to undergo gelation, the plurality of inkjet inks each containing a photocurable compound and a gelling agent to undergo temperature-induced reversible phase transition and each having a different composition; and
simultaneously irradiating the landed droplets of the plurality of inkjet inks with radiation.

2. The image forming method according to claim 1, wherein the plurality of inkjet inks include an inkjet ink having a content of a photopolymerization initiator of less than 0.1mass% based on the total mass of the inkjet ink.

3. The image forming method according to claim 1 or 2, wherein the plurality of inkjet inks include an inkjet ink having a content of the gelling agent of 0.5mass% or more and less than 5.0mass% based on the total mass of the inkjet ink.

4. The image forming method according to any one of claims 1 to 3, wherein the plurality of inkjet inks include an inkjet ink containing an aliphatic ester or aliphatic ketone as the gelling agent, the aliphatic ester or aliphatic ketone having a linear alkyl group containing 12 or more carbon atoms in the main chain thereof.

5. The image forming method according to any one of claims 1 to 4, wherein the radiation is an electron beam having an accelerating voltage of less than 150 kV.
